# EUROPEAN PATENT SPECIFICATION

(11) **EP 4 313 885 B1**
(45) Date of publication and mention of the grant of the patent: **15.10.2025**
(21) Application number: 22717116.2
(22) Date of filing: 21.03.2022
(51) Int. Cl.: C02F 11/127, C02F 11/18, C02F 103/28, A23K 10/37, A23K 50/90

(54) **METHOD OF PREPARING A PULP AND PAPER BIOSLUDGE TO A FORM THAT CAN BE DIGESTED BY LARVAE**
VERFAHREN ZUR AUFBEREITUNG EINES ZELLSTOFF- UND PAPIERBIOSCHLAMMS IN EINE FÜR LARVEN VERDAULICHE FORM
MÉTHODE DE PRÉPARATION D'UNE BOUE BIOLOGIQUE DE PÂTE ET DE PAPIER SOUS UNE FORME POUVANT ÊTRE DIGÉRÉE PAR DES LARVES

(30) Priority: 01.04.2021 SE 2130090
(43) Date of publication of application: 07.02.2024
(73) Proprietor: Ragn-Sells Treatment and Detox AB, 191 29 Sollentuna (SE)
(72) Inventor: NORGREN, Robert, 85357 Sundsvall (SE); BJÖRKQVIST, Olof, 857 40 Sundsvall (SE); JONSSON, Anders, 833 92 Strömsund (SE); KIHL, Anders, 178 38 Ekerö (SE)
(74) Representative: Herbjørnsen, Rut
(86) International application number: PCT/EP2022/057323
(87) International publication number: WO 2022/207388

(56) References cited:
- EP-B1- 2 414 531
- EP-B1- 3 132 089
- RU-C1- 2 688 315
- US-A1- 2005 045 289
- NORGREN ET AL.: "Bio-sludge from the Pulp and Paper Industry as Feed for Black Soldier Fly Larvae: A Study of Critical Factors for Growth and Survival", WASTE AND BIOMASS VALORIZATION, 5 November 2018 (2018-11-05), Retrieved from the Internet <URL:https://link.springer.com/article/10.1007/s12649-019-00864-x> [retrieved on 20220602]

## Description

### Technical Field

The present invention relates to a method of preparing a sludge to make it suitable as a feed for larvae.

### Background

To meet the needs of a growing population, the world's protein production must increase. The total area of agricultural land and the total capture fisheries production has not increased since 2001 and 1996 respectively (FAOSTAT, 2018; The World Bank, 2020) which will expose present land and sea-based production systems to increased pressure in the near future. Demand for protein is predicted to double by 2050 and opportunities for substitution and increased production are limited. The factors limiting protein production such as available farmland are already constrained.

One way to mitigate this problem is to develop circular solutions for current industrial production systems that have a potential for protein production from waste flows, by using the waste as feed for organisms such as insect larvae. One commonly used type of larvae is the black soldier fly larvae (BSFL). Various types of biological waste products have been tried for such purposes, including manure.

In Sweden and in many other countries, one such type of biological waste is pulp and paper biosludge. At present, pulp and paper biosludge (PPBS) is used for energy or nutrient recovery. Energy recovery is mainly done through incineration and to some extent anaerobic digestion. Nutrient recovery of PPBS is achieved through composting. Such existing solutions are expensive and inefficient; the amount of energy recovered is low and the quality of the compost that can be produced is poor leaving only low value application.

Norgren et al, Bio-sludge from the Pulp and Paper Industry as Feed for Black Soldier Fly Larvae: A Study of Critical Factors for Growth and Survival, Waste and Biomass Valorization, https://doi.org/10.1007/s12649-019-00864-x investigated the possibility of using PBBS as a nutrient for feeding larvae and found that the nutrients in PBBS are not readily available to the larvae. A factor contributing to the problem is lignocellulose being recalcitrant to biodegradation. The presence of lignin provides protection against microbial attack and oxidation and consequently causes low availability of lignocellulose carbohydrates to metabolic processes. Increased availability of the carbohydrates in the PBBS to the metabolic process has the potential to improve growth of insects such as black soldier fly larvae.

Various attempts have been made to treat different types of lignocellulose-rich waste to make their nutrients more accessible. For example Liu C, et al, Pretreatment is an important method for increasing the conversion efficiency of rice straw by black soldier fly larvae based on the function of gut microorganisms, Science of the Total Environment, https://doi.org/10.1016/j.scitotenv.2020.144118 proposed an alkaline peroxide pre-treatment to make rice straw suitable as feed for larvae .

Other proposed treatments include heat, fungi, irradiation, fermentation and size reduction by sieving, see for example the patent RU 288315 C1.

Most of these treatments only have a partial effect.

### Summary of the invention

It is an object of the present invention to provide a way to use a lignocellulose-rich sludge, PPBS, as feed for larvae that is both cost-efficient and provides sufficient nutrient availability.

Hence, the present disclosure relates to a method of preparing PPBS comprising lignocellulose to produce a feed mix suitable as feed for larvae, comprising the step of heating the sludge to a temperature between 50°C and 200 °C, preferably between 50°C and 180 °C for a period of time of at least 5 minutes. The sludge is pulp and paper biosludge. The heating process breaks down the lignocellulose to forms that can be digested by the larvae, such as starch and sugar.

The heating process may be a hygienization process performed at a temperature between 50 °C and 100 °C for a period of time and using the hygienized sludge to form the feed mix.

Alternatively, the heating process may be a sterilization process perfomed in a closed container at a temperature of between 100 °C and 200 °C for at least 5 minutes and using the sterilized sludge to form the feed mix. A more preferred temperature interval is 140 °C - 180 °C.

The heating time needed for producing a suitable feed will depend on the heating temperature. Lower temperatures will require longer heating times. Suitable heating times have been found to be between 5 and 600 minutes.

The heating process may be combined with hydrolysis of the sludge. If the sludge has been dewatered, this involves diluting it to a suitable concentration. Alternatively sludge that has not already been dewatered may be used directly. The combination with hydrolysis is particularly useful in combination with sterilization but may also be used with hygienization.

If the sludge is wet, it must be dewatered after the treatment, to produce the feed mix. This may be performed by any suitable dewatering device, such as a centrifuge.

The method may also include adding one or more additives to the feed mix to improve its structure, density and/or nutritional value. How to do this is known per se.

### Brief description of drawings

The invention will be described in more detail in the following, by way of examples and with reference to the appended drawings.
Figure 1 is a flow chart of an overall method according to the invention
Figure 2 illustrates the impact of pre-treatment temperature on larvae weight.
Figure 3 illustrates the impact of pre-treatment time on larvae weight.

### Detailed description of embodiments

The use of insects such as fly larvae as feed for larger animals is well known. To breed the insects, suitable feed must be provided and it is recognized that it would be advantageous, both economically and environmentally, if such feed could be obtained from products that would otherwise not be useful. Attempts have been made in recent years to produce insect feed from biological waste such as manure and rest products from food production. Many such waste products contain a lot of lignocellulose, which makes them less efficient as feed because the insects cannot process the nutrients.

Pulp and paper biosludge is available in large amounts in Sweden and many other countries. Using such biosludge as insect feed would mean that an inexpensive and readily available resource could be used to breed larvae and also that the amount of waste from the paper industry would be reduced. However, lignocellulosic feed is known to be difficult for the larvae to utilize because of the content of crude fiber, where the larvae need to penetrate through the outer cuticle layer of plant products.

To make the nutrients in the biosludge available to the larvae, heat treatment is used, possibly in combination with other treatments. As will be clear from the following, heat treatment can use any temperature between 50 °C and 200 °C.
Some embodiments of the method involves hygienization of the sludge. Hygienization involves heating the sludge to a temperature below 100 °C for a period of time, which will reduce and inactivate the microorganisms in the sludge. Temperatures above 50 °C may be used for hygienization, with 52 °C reported in some cases as a lowest suitable temperature. The amount of time required to achieve hygienization depends on the temperature, decreasing with increasing temperature. It has been shown that using biosludge that has been treated in this way as feed increases the growth of the larvae compared with non-treated biosludge. For example, hygienization at a temperature of 70 °C for 60 minutes has been shown to be effective for the purposes of the invention.

In other embodiments, temperatures over 100 °C are used in the treatment, resulting in a sterilization of the sludge. Temperatures between 100 °C and 200 °C have been found to be feasible, with best results at temperatures up to 180 °C.

Both sterilization and hygienization may be performed on sludge, which has been dewatered before the treatment, or on wet sludge. Using dewatered sludge is energy-efficient because only the sludge itself has to be heated.

If the sludge is wet, heating to sterilization temperatures will result in a sterilization of the sludge and a hydrolysis of the lignocellulose in the sludge. This will make the nutrients in the sludge more readily available to the larvae. If wet sludge is used, it has to be dewatered before it can be used as feed.

If the sludge has been dewatered before heating treatment, the hydrolysis requires diluting the sludge to a suitable concentration of dry content, followed by hygienization or sterilization of the sludge. The sludge must be diluted to a level allowing it to be stirred to facilitate even hygienization or sterilization of all the sludge, while being cost and energy efficient. A dry content up to 15% has been found to yield a good result and it could be as low as 0.5%. Higher dry content gives a significantly lower degree of hygienization and sterilization, however this can be partly compensated for by longer treatment time. Sterilization involves heating the sludge to a temperature of 100 °C or higher, which will kill the microorganisms. Temperatures up to 180 °C have been found to be effective. Above 200 °C the effect is significantly reduced.

For sterilization and hydrolysation, the diluted sludge is heated for a period of time in a closed reactor. Periods longer than 5 minutes up to 2 hours have been found suitable, with a period of up to 60 minutes yielding the best results. Finally, the excess water is removed, for example by centrifugation. Before using the resulting mass as feed, other preparatory steps may be undertaken, for example, other nutrients may be added. Other additives maybe added for improving the structure of the feed mix with respect to properties such as grain size, density and water retention.

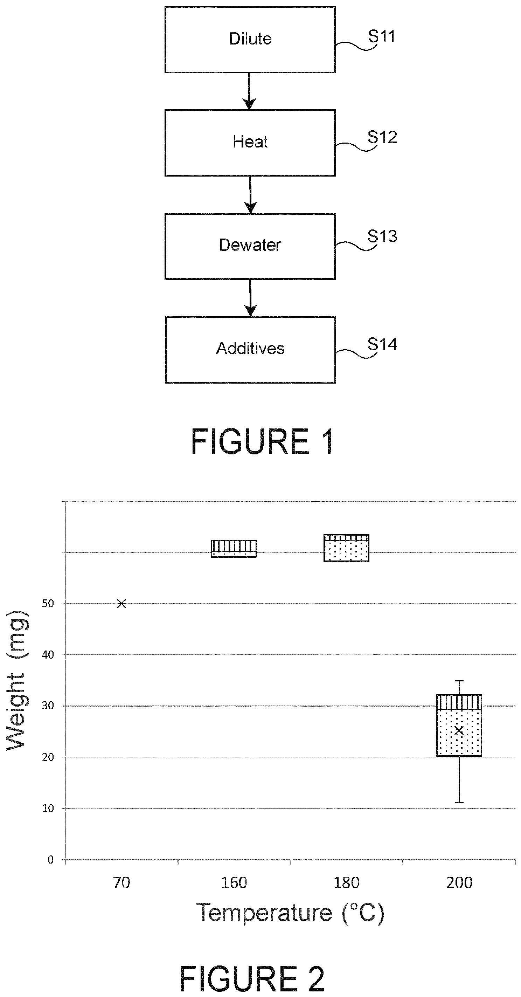

Figure 1 is a flow chart presenting an overview of the method as discussed above. In a first optional step S11, the sludge is diluted, to enable hydrolysis in combination with the heat treatment. If the sludge has not been dewatered, dilution may not be needed. Alternatively, dry sludge may be used in the process, so that only heating is applied without the hydrolysis. In step S12, the wet or dry sludge is heated to a temperature between 50 °C and 200 °C. As mentioned above, temperatures below 100 °C result in hygienization of the sludge while temperatures above 100 °C result in sterilization of the sludge. The duration of the treatment in step S12 should be sufficient to substantially reduce pathogens or break down the lignocellulose to a form that can be digested by the larvae, such as starch or sugar.

In step S13, after the heat treatment the sludge is dewatered. This is not necessary if the heating process was performed on dry sludge. Step S14 is an optional step in which additives are added to the sludge to improve its density, structure and/or nutritional value. Such additives, and how to use them, are known in the art.

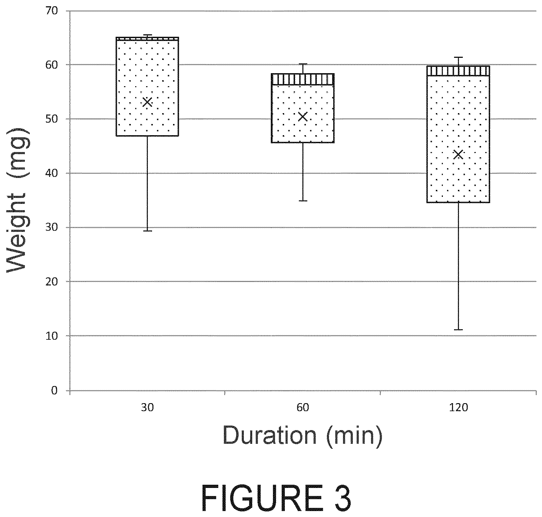

Figures 2 and 3 show the final weight of larvae fed biosludge pre-treated at nine combinations of temperature (160, 180, 200°C) and duration (30, 60, 120 minutes) as well as hygienisation at 70°C and 60 minutes according to the invention. The pre-treated biosludge was mixed with supplementary feed. The resulting feed was fed to neonate black soldier fly larvae weighing 2 mg each. The final weight was measured after 22 to 38 days. Both Figures 2 and 3 show the resulting weight distribution, each block representing 25 % of the larvae. The horizontally lined blocks and the dotted blocks represent the second and third quartile of the larva, respectively, with respect to their weight, and the lines above and below the blocks represent the first and the fourth quartile, that is, the 25 % larvae with the highest weight and the 25 % larvae with the lowest weight, respectively.

Figure 2 shows the correlation of the final weight of larvae and pre-treatment temperature. The feed that had been treated at 160 and 180 °C had larvae weighing 60 mg at average. Treatment at 70 °C showed a somewhat lower average weight of 50 mg, whereas treatment at 200 degrees resulted in even lower average weight of 20 - 30 mg.

Figure 3 shows the correlation between final weight of larvae and duration. Pre-treatment at 30 and 60 minutes had larvae weighing 53 and 50 mg at average respectively. Pre-treatment at 120 minutes had larvae weighing 43 mg at average.

Examples: PBBS sludge was diluted with water to a dry matter content of approximately 10 %. The diluted sludge was then heated to a temperature of 160°C in 30 minutes, 160°C in 60 minutes and 180°C in 30 minutes. All of these combinations of temperature and time were found to yield satisfactory results.

When the feed has been produced, it can be used to breed insect larvae such as black soldier fly larvae in a conventional way, and the larvae can then be prepared and used as feed for larger animals in a manner well known in the art.

## Claims

1. A method of producing a feed mix for larvae, comprising preparing a pulp and paper biosludge comprising lignocellulose by heating the sludge to a temperature between 50 °C and 200 °C, preferably between 50 °C and 180 °C for a period of time of at least 5 minutes, to break down the lignocellulose to a form that can be digested by the larvae.

2. A method according to claim 1, wherein the step of heating involves hygienizing the sludge by heating it to between 50°C and 100 °C, and using the hygienized sludge to form a feed mix.

3. A method according to claim 1, wherein the step of heating involves sterilizing the sludge by heating it in a closed container to a temperature of between 100 °C and 200 °C for at least 5 minutes then using the sterilized sludge to form a feed mix.

4. A method according to any one of the preceding claims, wherein the heating is performed on sludge that has been dewatered.

5. A method according to any one of the claims 1 - 3, wherein the heating is performed on wet sludge, the method further comprising the step of separating the sludge from the water to obtain the feed mix.

6. A method according to claim 5, wherein the separating step is performed by a dewatering device such as a centrifuge.

7. A method according to any one of the preceding claims, wherein the heating is performed for a period of 5 - 600 minutes.

8. A method according to any one of the preceding claims, further comprising adding one or more additives to the feed mix to improve its structure, density and/or nutritional value.

9. A method according to any one of the preceding claims, comprising the step of diluting the sludge, wherein the diluted sludge is heated to a temperature between 52 °C and 100 °C.

10. A method according to any one of the claims 1 - 8, comprising the step of diluting the sludge, wherein the diluted sludge is heated to a temperature between 100 °C and 200 °C, preferably between 100 °C and 190 °C.

## Patentansprüche

1. Verfahren zum Herstellen einer Futtermischung für Larven, umfassend das Herstellen eines Zellstoff- und Papierbioschlamms, umfassend Lignocellulose, durch Erwärmen des Schlamms auf eine Temperatur zwischen 50 °C und 200 °C, vorzugsweise zwischen 50 °C und 180 °C, für einen Zeitraum von mindestens 5 Minuten, um die Lignocellulose in eine Form zu zerlegen, die durch die Larven verdaut werden kann.

2. Verfahren nach Anspruch 1, wobei der Schritt des Erwärmens ein Hygienisieren des Schlamms durch Erwärmen dieses auf 50 °C bis 100 °C und ein Verwenden des hygienisierten Schlamms, um eine Futtermischung zu formen, beinhaltet.

3. Verfahren nach Anspruch 1, wobei der Schritt des Erwärmens ein Sterilisieren des Schlamms durch Erwärmen dieses in einem geschlossenen Behälter auf eine Temperatur zwischen 100 °C und 200 °C für mindestens 5 Minuten, dann das Verwenden des sterilisierten Schlamms, um eine Futtermischung zu formen, beinhaltet.

4. Verfahren nach einem der vorstehenden Ansprüche, wobei das Erwärmen an Schlamm durchgeführt wird, der entwässert wurde.

5. Verfahren nach einem der Ansprüche 1 bis 3, wobei das Erwärmen an nassem Schlamm durchgeführt wird, das Verfahren ferner umfassend den Schritt eines Trennens des Schlamms von dem Wasser umfasst, um die Futtermischung zu erhalten.

6. Verfahren nach Anspruch 5, wobei der Trennschritt durch eine Entwässerungsvorrichtung, wie eine Zentrifuge, durchgeführt wird.

7. Verfahren nach einem der vorstehenden Ansprüche, wobei das Erwärmen für einen Zeitraum von 5-600 Minuten durchgeführt wird.

8. Verfahren nach einem der vorstehenden Ansprüche, ferner umfassend ein Zusetzen eines oder mehrerer Zusatzstoffe zu der Futtermischung, um deren Struktur, Dichte und/oder Nährwert zu verbessern.

9. Verfahren nach einem der vorstehenden Ansprüche, umfassend den Schritt eines Verdünnens des Schlamms, wobei der verdünnte Schlamm auf eine Temperatur zwischen 52 °C und 100 °C erwärmt wird.

10. Verfahren nach einem der Ansprüche 1 bis 8, umfassend den Schritt des Verdünnens des Schlamms, wobei der verdünnte Schlamm auf eine Temperatur zwischen 100 °C und 200 °C, vorzugsweise zwischen 100 °C und 190 °C, erwärmt wird.

## Revendications

1. Procédé de production d'un mélange d'alimentation pour larves, comprenant la préparation d'une bouillie biologique de pâte et de papier comprenant de la lignocellulose en chauffant la bouillie à une température comprise entre 50 °C et 200 °C, de préférence entre 50 °C et 180 °C, pendant une période de temps d'au moins 5 minutes, afin de décomposer la lignocellulose en une forme qui peut être digérée par les larves.

2. Procédé selon la revendication 1, dans lequel l'étape de chauffage comporte l'hygiénisation de la bouillie en la chauffant à une température comprise entre 50 °C et 100 °C, et l'utilisation de la bouillie hygiénisée pour former un mélange d'alimentation.

3. Procédé selon la revendication 1, dans lequel l'étape de chauffage comporte la stérilisation de la bouillie en la chauffant dans un récipient fermé à une température comprise entre 100 °C et 200 °C pendant au moins 5 minutes, puis l'utilisation de la bouillie stérilisée pour former un mélange d'alimentation.

4. Procédé selon l'une quelconque des revendications précédentes, dans lequel le chauffage est effectué sur une bouillie qui a été déshydratée.

5. Procédé selon l'une quelconque des revendications 1 à 3, dans lequel le chauffage est effectué sur une bouillie humide, le procédé comprenant en outre l'étape consistant à séparer la bouillie de l'eau pour obtenir le mélange d'alimentation.

6. Procédé selon la revendication 5, dans lequel l'étape de séparation est effectuée par un dispositif de déshydratation tel qu'une centrifugeuse.

7. Procédé selon l'une quelconque des revendications précédentes, dans lequel le chauffage est effectué pendant une période allant de 5 à 600 minutes.

8. Procédé selon l'une quelconque des revendications précédentes, comprenant en outre l'ajout d'un ou de plusieurs additifs au mélange d'alimentation afin d'améliorer sa structure, sa densité et/ou sa valeur nutritionnelle.

9. Procédé selon l'une quelconque des revendications précédentes, comprenant l'étape consistant à diluer la bouillie, dans lequel la bouillie diluée est chauffée à une température comprise entre 52 °C et 100 °C.

10. Procédé selon l'une quelconque des revendications 1 à 8, comprenant l'étape consistant à diluer la bouillie, dans lequel la bouillie diluée est chauffée à une température comprise entre 100 °C et 200 °C, de préférence entre 100 °C et 190 °C.
